# EUROPÄISCHE PATENTSCHRIFT

(11) **EP 2 136 672 B1**
(45) Veröffentlichungstag und Bekanntmachung des Hinweises auf die Patenterteilung: **01.08.2018**
(21) Anmeldenummer: 08735151.6
(22) Anmeldetag: 10.04.2008
(51) Int. Cl.: A46B 5/02

(54) **ZAHNBÜRSTE**
TOOTHBRUSH
BROSSE À DENTS

(30) Priorität: 13.04.2007 DE 102007017869
(43) Veröffentlichungstag der Anmeldung: 30.12.2009
(73) Patentinhaber: Braun GmbH, 61476 Kronberg/Taunus (DE)
(72) Erfinder: BALLMAIER, Kathi, 61273 Wehrheim (DE); WASOW, Sören, 63579 Freigericht (DE); WINKLER, Tilmann, 61476 Kronberg (DE)
(74) Vertreter: Töpert, Verena Clarita
(86) Internationale Anmeldenummer: PCT/EP2008/002842
(87) Internationale Veröffentlichungsnummer: WO 2008/125274

(56) Entgegenhaltungen:
- EP-A- 1 621 105
- EP-A- 1 621 106
- WO-A-01/43582
- WO-A-2005/122827
- US-B1- 7 137 166

## Beschreibung

Die vorliegende Erfindung betrifft eine Zahnbürste mit einem Kopfbereich mit Reinigungselementen, einem Griffbereich und einem Halsbereich, der den Kopf- und den Griffbereich miteinander verbindet, wobei die Zahnbürste mit einer ersten Komponente aus Kunststoff und zumindest einer weiteren zweiten Komponente ebenfalls aus Kunststoff ausgebildet ist, wobei die erste Komponente eine Struktur aufweist, die von der zweiten Komponente überdeckt ist.

Eine Zahnbürste, deren Grundkörper aus zwei Kunststoffkomponenten gebildet ist, ist beispielsweise aus der US 5,781,958 bereits bekannt. Hierbei ist ein Hartkunststoff vorgesehen, der sich von einem Kopfbereich über einen Halsbereich bis zu einem Griffbereich erstreckt, und der in einem Griffbereich eine innere Struktur aufweist, um die die zweite Komponente aus Weichkunststoff herumgespritzt ist. Die Weichkomponente im Griffbereich ermöglicht zwar eine bessere Griffigkeit und Anpassung an die Hand des Benutzers, jedoch sind Weichkunststoffe generell und insbesondere mit einer Oberflächenstruktur, wie z. B. Rillen, schlechter zu reinigen und erhöhen die Herstellkosten sehr. Zudem trägt der Weichkunststoff kaum zur Gesamtfestigkeit des Zahnbürstenkörpers bei, so dass die Hartkomponente sehr massiv auszubilden ist.

Aus der EP 1 532 891 A1 ist eine Zahnbürste der eingangs genannten Art bekannt. Diese Zahnbürste besteht im wesentlichen aus mindestens zwei Komponenten, einer ersten Hartkunststoffkomponente, die sich vom Kopf- über den Hals- bis zum Griffbereich erstreckt und im Griffbereich skelettartig mit Fortsätzen ausgebildet ist, sowie einer zweiten Weichkunststoffkomponente, die um den Hartkunststoff herum gespritzt wird und dabei die Fortsätze zum Teil überdeckt und zum Teil diese frei lässt. Die Weichkunststoffkomponente ist zudem mit einer Außenstruktur versehen. Die aus Fortsätzen gebildete Struktur der ersten Komponente ist überwiegend mit Begrenzungswandungen versehen, die relativ zu einer Längsachse der Zahnbürste sich radial nach außen erstrecken. Mithin wirken die steilen Begrenzungswandungen der Fortsätze als strömungsungünstige Hindernisse für die zweite einzuspritzende Weichkomponente, wenn eine Lunkerbildung in Abwesenheit von anderen Gegenmaßnahmen im relativ zum Einspritzpunkt entfernteren Bereich der Zahnbürste vermieden werden soll. Ferner erfordert die Struktur der Fortsätze entsprechende Kompromisse bzw. Anpassungen an die physikalischen Eigenschaften der zweiten Komponente und an die spritztechnischen Parameter, wie z. B. Einspritzdruck, damit die zweite Komponente trotz der Ausbildung der Fortsätze alle zu umschließende Abschnitte möglichst gleichmäßig und fehlerfrei erreicht.

Es ist daher eine Aufgabe der vorliegenden Erfindung, eine Zahnbürste der eingangs genannten Art bereitzustellen, die in hoher herstelltechnischer Qualität, insbesondere unter Vermeidung einer Schlierenbildung herstellbar ist.

Diese Aufgabe wird gelöst durch eine Zahnbürste mit den Merkmalen des Anspruchs 1. Weitere vorteilhafte Merkmale dieser Zahnbürste sind mit den Merkmalen der Unteransprüche beschrieben.

Dadurch, dass die Reliefstruktur benachbart zu den Hoch- und Tiefbereichen Zwischenhochbereiche aufweist, deren Abstand zur Außenfläche der zweiten Komponente zwischen dem der Hoch- und Tiefbereiche liegt, ist die Reliefstruktur nicht nur durch Hoch- und Tiefbereiche charakterisiert, sondern durch ein abgestuftes oder stufenloses Höhenprofil, so dass die Reliefstruktur nicht durch steile, vertikal abstehende Fortsätze gebildet ist, die auf die Strömungsverhältnisse für die die Reliefstruktur bedeckende zweite Komponente ungünstige Auswirkungen hätte. Die abgestufte Struktur mit Zwischenhochbereichen in der Reliefstruktur ermöglicht es, eine zweite Komponente mit moderatem Moldflow-Index zu verwenden mit weniger Nachdruck die zweite Komponente in das Spritzgießwerkzeug einzuspritzen und die Gefahr von Lufteinschlüssen in der zweiten Komponente auch zu vermeiden, wenn diese beispielsweise wie die erste Komponente ebenfalls aus Polypropylen ist. Durch die Verwendung eines geringeren Nachdruckes für das Einspritzen der zweiten Komponente und die insgesamt strömungsgünstigere Form der Reliefstruktur mit Zwischenhochbereichen ist ein Anschmelzen und Ausschwemmen der ersten Komponente durch die heiße zweite Komponente und die damit einhergehende Gefahr von Schlierenbildung vermieden.

In vorteilhafter Weiterbildung sind die Hoch- und Zwischenhochbereiche mit einer ebenen oder glatten Abschlussfläche ausgebildet. Dies führt zu einem ebenfalls günstigeren Durchströmen der zweiten Komponente auf und entlang der ersten Komponente.

In weiterer vorteilhafter Weiterbildung sind die Zwischenhochbereiche als relativ zu einer Horizontalebene entlang der Zahnbürstenlängsachse geneigt Abschnitte ausgebildet. Wenn die Reliefstruktur beispielsweise eine (in Schnittdarstellung) Zickzackstruktur aufweist und somit der Zwischenhochbereich eine geneigte Ebene ist, so kann die zweite darübergespritzte Komponente ausgezeichnet über diese Zickzackstruktur entlang strömen und diesen Abschnitt ohne Qualitätseinbußen bedecken und ausfüllen. Ein ähnlicher Effekt ist erzielbar, wenn die Reliefstruktur in Draufsicht ein florales oder anderes Muster aufweist, dass keine (im Seitenschnitt) Zickzackstruktur aber auch Hoch-, Zwischenhoch- und Tiefbereiche aufweist.

In vorteilhafter Weiterbildung beträgt der kürzeste Abstand zwischen den jeweiligen Hochbereichen der Reliefstruktur und der Außenfläche der zweiten Komponente zwischen 0,4 mm und 1 mm. Da bevorzugt die Reliefstruktur nur zur Oberseite im Griffbereich ist, also der gleichen Seite auf der auch am Kopfbereich die Zahnreinigungselemente angeordnet sind, entspricht die betreffende Außenfläche der Oberseite des Griffbereichs. Es ist dies die Seite des Griffbereichs, auf der ebenfalls die Daumenablage am Griffbereich vorgesehen ist. Für ein Zickzackmuster als Reliefstruktur bedeutet dies, dass die der Oberseite des Griffbereichs nächstgelegenen Kanten des Zickzackmusters die Hochbereiche bilden und diese einen Abstand zwischen 0,4 mm und 1 mm aufweisen. Vorzugsweise beträgt der größte Abstand von der Außenfläche der zweiten Komponente zu den Tiefbereichen zwischen 3 mm und 6 mm. Wiederum für ein Zickzackmuster als beispielhafte Reliefstruktur hat dies zur Folge, dass die von der Oberseite des Griffbereichs abgewandten Unterkanten des Zackenmusters die Tiefbereiche bilden und diese Kanten in einem Abstand zur Oberfläche von 3 mm bis 6 mm angeordnet sind. Besonders bevorzugt beträgt der kürzeste Abstand zwischen den Hochbereichen und der Außenfläche der zweiten Komponente zwischen 0,6 mm und 0,9 mm. Besonders bevorzugt beträgt der größte Abstand von der Außenfläche der zweiten Komponente zur den Tiefbereichen zwischen 3 mm und 5 mm. Es hat sich gezeigt, dass in diesen Abstandsbereichen die zweite Komponente die erste Komponente in für ein qualitativ hochwertiges Ergebnis optimalerweise bedecken kann und optimierte Spritzgusszykluszeiten für jede Komponente erzielbar sind.

In vorteilhafter Weiterbildung ist der Anspritzpunkt zum Spritzgießen der zweiten Komponente in einem rückwärtigen Endbereich des Griffbereichs angeordnet, auf einer Seite des Griffbereichs die zur Oberseite der Zahnbürste an der im Kopfbereich die Reinigungselemente zum Zähneputzen angeordnet sind abgewandt ist. Ferner ist die Reliefstruktur derart ausgebildet, dass die Zwischenhochbereiche, die näher zum Anspritzpunkt angeordnet sind, relativ zur Außenfläche bzw. Oberseite der zweiten Komponente tiefer angeordnet sind als unmittelbar benachbarte Zwischenhochbereiche, die relativ zu den erstgenannten Zwischenhochbereichen weiter entfernt zum Anspritzpunkt angeordnet sind. Es hat sich gezeigt, dass eine gleichmäßigere Füllung der Werkzeugform für die zweite Komponente eher umgekehrt dann ermöglicht ist, wenn die Zwischenhochbereiche mit zunehmender Entfernung vom Anspritzpunkt für die zweite Komponente im Werkzeug einen weiteren Abstand zur Außenfläche bzw. Oberfläche bei der Daumenrast der Zahnbürste aufweisen, je weiter die Entfernung zum Anspritzpunkt liegt. Eine komplexere Reliefstruktur, die durch die zweite Komponente zu überdecken ist, kann durch eine derartige (wie unten und in den Figuren beschrieben) Ausbildung eine qualitativ höherwertigere Überdeckung der Reliefstruktur z.B. ohne Schlierenbildung durch die zweite Komponente liefern.

In vorteilhafter Weiterbildung ist die Reliefstruktur ausschließlich an der Oberseite des Griffbereichs angeordnet, die mit der Seite übereinstimmt, an der die Zahnreinigungselemente des Kopfbereichs vorgesehen sind. Wie bereits zuvor erwähnt, entspricht diese Oberseite auch der Seite der Zahnbürste auf der die Daumenablage bzw. der Daumenrast vorgesehen ist. Dies hat zum Vorteil, dass eine Zahnbürste mit einem andersartigen Erscheinungsbild durch eine andere Reliefstruktur durch Austausch einer einzigen von zumindest vier notwendigen Werkzeughälften (für zwei Werkzeuge für 2 Komponentenspritzung) möglich ist. Die zu ändernde Werkzeughälfte für eine veränderte Reliefstruktur entspricht der, die die Oberseite der ersten Komponente definiert. Alle übrigen Werkzeughälften könnten bei veränderter Reliefstruktur so unverändert bleiben. Bei besonders langlebigen Werkzeugen ist sogar nur durch den Austausch eines Einsatzwerkzeuges, das in dem Bereich der Reliefstruktur in der oberen Werkzeughälfte für die erste Komponente, die die Reliefstruktur festlegt, eine Veränderung der Reliefstruktur und damit eine Veränderung des Erscheinungsbildes der Zahnbürste möglich. Von weiterer Bedeutung ist, dass die Reliefstruktur auf der Oberseite der Zahnbürste und der Anspritzpunkt relativ dazu auf der Unterseite der Zahnbürste angeordnet ist. Somit liegt die Reliefstruktur, ähnlich wie die Öffnungen für die Borstenbüschel der Zahnreinigungselemente, auf der gleichen Werkzeugauswerferseite der ersten Komponente.

In vorteilhafter Weiterbildung sind die Kanten der Reliefstruktur mit einem Radius von > 0,15 mm, insbesondere > 0,2 mm verrundet. Es hat sich gezeigt, dass dies ebenfalls zu einem qualitativ hochwertigen Erhaltungszustand der Reliefstruktur führt auch wenn eine zweite Komponente über diese überdeckend überspritzt wird.

In weiterer vorteilhafter Ausbildung der Zahnbürste ist die erste Komponente aus Hartkunststoff, insbesondere Polypropylen und die zweite Komponente ebenfalls aus Hartkunststoff, insbesondere ebenfalls aus Polypropylen ausgebildet. Eine Zweikomponentenzahnbürste mit zwei Hartkunststoffkomponenten, wobei beide insbesondere aus Polypropylen ausgebildet sind, bereitet zunächst ein weiteres Problem, weil üblicherweise die Zweikomponentenherstellung mit jeweils Polypropylen zu einer wenig optimalen Haftverbindung beider Komponenten führt und die qualitativen Probleme, insbesondere einer Schlierenbildung beim Einspritzen der zweiten Komponente durch diese Materialkombination eher erhöht werden. Die oben und unten beschriebenen Maßnahmen sollen dem jedoch entgegenwirken. Unter hygienischen Aspekten ist jedoch die Ausbildung der gesamten Zahnbürstenoberfläche nur aus Hartkunststoff mit insbesondere Polypropylen zu bevorzugen. Auch Kostenargumente und die Darstellbarkeit der Reliefstruktur sind Vorteile, die mit dieser Hart-/Hartmaterial-Kombination einhergehen.

Eine haftverbessernde Wirkung kann dadurch erreicht werden, dass eine der beiden Komponenten nicht als Hartkunststoff sondern als Elastomer, insbesondere als thermoplastisches Elastomer ausgebildet ist. Um zugleich von den Charakteristika der Hart-/Hart-Kombination zu profitieren und die Verbindungseigenschaften beider Komponenten jedoch zu verbessern, ist vorteilhaft der ersten oder zweiten Komponente ein thermoplastisches Elastomer oder ein anderes Elastomer zu max. 15 oder 20 Gewichts-% zugemischt. Als Minimumzumischung werden 5 % vorgesehen.

In weiterer vorteilhafter Ausbildung der Zahnbürste sind der zweiten Komponente einfärbende Bestandteile zu 0,5 % bis 6 %, insbesondere zu 1 % bis 5% und weiter insbesondere zu 1,5 % bis 4 % nach Gewichtsanteilen beigemischt. Das qualitative Erscheinungsbild der gesamten Zahnbürste insbesondere bei einer Reliefstruktur wird dadurch erhöht.

In Weiterbildung der Zahnbürste weisen die Zwischenhochbereiche eine Fläche von > 1 mm², insbesondere von > 3 mm² auf. Bei einer im Längsschnitt als Zickzackmuster ausgebildeten Reliefstruktur, wie unten beispielhaft dargestellt, weisen die geneigten Schrägflächen als Zwischenhochbereiche etwa 3 mm² bis 3 cm² auf. Diese flächige Ausbildung der Zwischenhochbereiche ermöglicht ebenfalls ein günstiges Entlangströmen der zweiten Komponente während des Einspritzens in die Werkzeugform. Die Zwischenbereiche schließen relativ zu einer ebenen Horizontalfläche entlang der Längsachse der Zahnbürste einen positiven oder negativen Winkel von 0 ° bis 75°, insbesondere von 0° bis 60° ein. Für das beispielhafte ausgewählte Zickzackmuster der Reliefstruktur bedeutet dies einen Neigungswinkel der Schrägflächen von unter 75°, insbesondere unter 60° und vorzugsweise unter 50°. Somit ist sichergestellt, dass keine steilen Wandungen in der Reliefstruktur entgegen der Strömungsrichtung für die zweite Komponente entgegenstehen. Die Reliefstruktur ist somit vorteilhaft entweder mit Schrägflächen statt senkrechten oder nahezu senkrechten (radial zur Längsache) ausgebildeten Flächen versehen die eine maximale Höhe von unter 3mm (vorzugsweise unter 1mm) nicht überschreiten.

In weiterer vorteilhafter Ausbildung der Zahnbürste sind 20 % bis 80 % der Gewichtsanteile aus der ersten Komponente und 80 % bis 20 % der Gewichtsanteile aus der zweiten Komponente für den Griffbereich vorgesehen.

In Weiterbildung der Zahnbürste ist die erste mit der zweiten Komponente durch mechanische Mittel verbunden. Dies ist insbesondere dann relevant, wenn die Zahnbürste gemäss einer bevorzugten Ausführungsform ausschließlich aus zwei Hartkunststoffen wie z. B. Polypropylen für beide Komponenten (ohne Elastomeranteile) hergestellt wird, da sich beide Komponenten von Natur aus schlecht verbinden. Die mechanische Verbindung wird durch Hinterschnitte und Durchbrüche in der ersten Komponente erzeugt, die von der zweiten Komponente um- und durchströmt werden, so dass eine mechanisch feste Verbindung zwischen beiden Komponenten gegeben ist.

Weitere Ziele, Merkmale sowie vorteilhafte Anwendungsmöglichkeiten der vorliegenden Erfindung ergeben sich aus der nachfolgenden Beschreibung von Ausführungsbeispielen anhand der Zeichnungen.

Es zeigen:
Fig. 1 eine Draufsicht auf die Oberseite des Griffbereichs und der Zahnbürste nach der Erfindung,
Fig. 2 eine Seitenansicht auf die Zahnbürste nach Fig. 1,
Fig. 3 eine Querschnittsdarstellung durch die Zahnbürste entlang des Schnittes D-D in Fig. 2,
Fig. 4 eine Querschnittsdarstellung durch die Zahnbürste entlang der Linie E-E in Fig. 2,
Fig. 5 eine Querschnittsdarstellung durch die Zahnbürste entlang der Linie F-F in Fig. 1,
Fig. 6 eine Querschnittsdarstellung durch die Zahnbürste entlang der Linie G-G in Fig. 1,
Fig. 7 eine Längsmittelschnittdarstellung entlang der Linie A-A in Fig. 1,
Fig. 8 eine vergrößerte Darstellung des mit B in Fig. 7 markierten Bereiches der Schnittdarstellung in Fig. 7,
Fig. 9 eine perspektivische Darstellung der ersten Komponente der Zahnbürste nach Fig. 1,
Fig. 10 eine Längsmittelschnittdarstellung durch die erste Komponente der Zahnbürste nach Fig. 9,
Fig. 11 eine perspektivische Darstellung der zweiten Komponente der Zahnbürste nach Fig. 1,
Fig. 12 eine Längsmittelschnittdarstellung durch die zweite Komponente der Zahnbürste nach Fig. 11,
Fig. 13 eine schematische Seitenansicht eines Werkzeugs zum Spritzen der ersten Komponente der Zahnbürste nach Fig. 1 und
Fig. 14 eine schematische Seitendarstellung des Werkzeugs zum Anspritzen der zweiten Komponente der Zahnbürste nach Fig. 1.

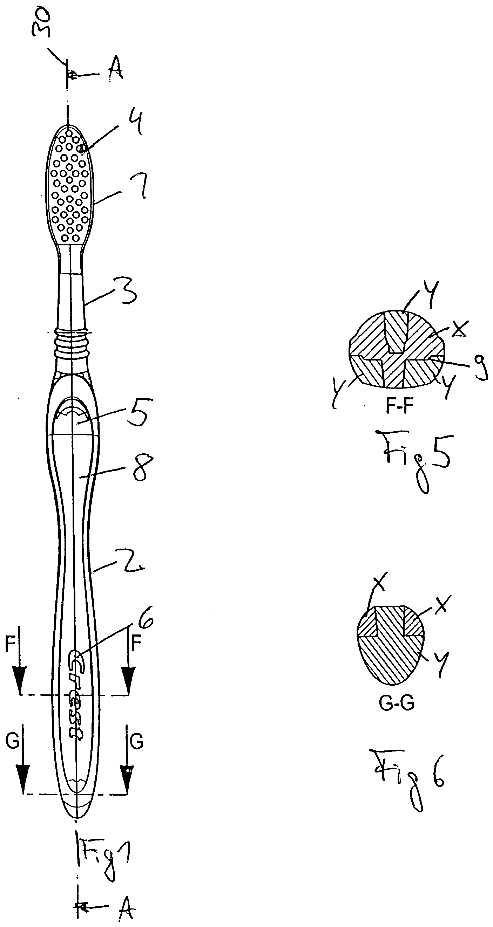

Fig. 1 zeigt die Draufsicht der Zahnbürste mit einem Kopfbereich 1, einem Griffbereich 2 und einen den Kopf- und Griffbereich verbindenden Halsbereich 3. An der Zahnreinigungsseite des Kopfbereichs 1 sind Reinigungselemente 4, wie z. B. ein Borstenfeld bestehend aus einer Vielzahl von Borstenbüscheln oder Weichelastomer-Reinigungselementen oder einer Kombination von beiden angeordnet. Die Oberseite 8 des Griffbereichs 2 ist mit einer Daumenrast 5 an dem dem Halsbereich zugewandten Endabschnitt des Griffbereichs und am anderen Endbereich der Oberseite mit einem Markenlogo 6 versehen, dass nicht aufgedruckt sondern durch die erste Komponente im Spritzgießverfahren hergestellt ist. Die Außenfläche der Zahnbürste ist vorzugsweise überwiegend glatt (also ohne eine feine Griffstrukturierung) und insbesondere auf der Oberseite oberhalb der Reliefstruktur glatt ausgebildet.

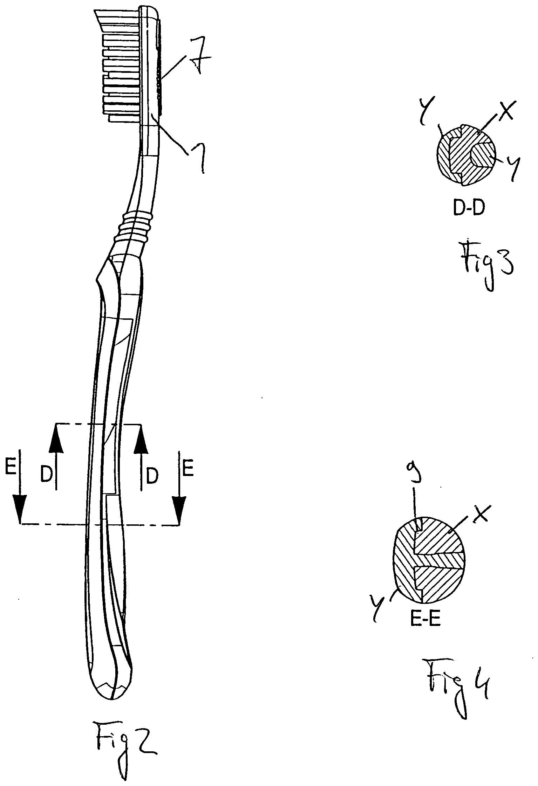

Fig. 2 zeigt eine Seitendarstellung der Zahnbürste, wobei auf der Rückseite des Kopfbereichs 1 Vorsprünge ausgebildet sind, die einen Zungenschaber 7 als weiteres Reinigungselement für die Mundhygiene bereitstellen.

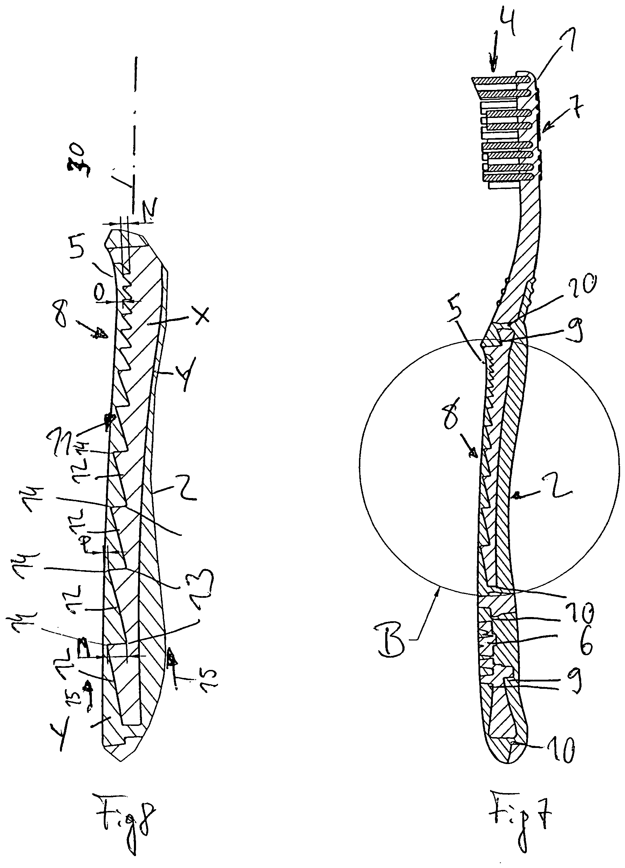

In den Schnittdarstellungen durch den Griffbereich 2 nach den Fign. 3 bis 6 sind die zwei Komponenten, in denen die Zahnbürste gespritzt wurde, durch entgegengesetzte Schraffuren voneinander abgegrenzt. Die erste Komponente ist mit X und die zweite Komponente mit Y bezeichnet. Wie aus den Schnittdarstellungen der Fign. 3 bis 6 und auch der Längsschnittdarstellung der Fig. 7 erkennbar ist, sind beide Komponenten durch verschiedene geometrische Hinterschnitte 9 und Durchbrüche 10 mechanisch aneinander fixiert, so dass auch bei einer Biegebelastung der Zahnbürste beide Komponenten fest verbunden bleiben. Die Hinterschnitte und Durchbrüche wirken über verschiedenen Achsen der Zahnbürsten (über die Längsachse und über radialen Querachsen), so dass die Verbindung nach allen Richtungen ausreichend fest ist.

Fig. 8 zeigt den mit B eingekreisten Ausschnitt der Fig. 7 in vergrößerter Darstellung. Damit ist die Reliefstruktur 11, die im Griffbereich 2 zur Oberseite 8 hin ausgerichtet ist, vergrößert dargestellt. Die Reliefstruktur ist vorliegend in Form eines Schnitt-Zickzackmusters ausgebildet. Relativ zu einer Horizontalen 30 entlang der Zahnbürstenlängsachse weist die Reliefstruktur geneigte, im wesentlichen ebene Flächen auf, die Zwischenhochbereiche 12 bilden. Die Zwischenhochbereiche 12 erstrecken sich von Tiefbereichen 13 zu Hochbereichen 14. Die Tief- und die Hochbereiche sind im Falle dieses Zickzackmusters als Reliefstruktur als tiefe und als hohe Kanten ausgebildet. Die Tiefbereiche bilden Tiefpunkte mit einem relativ zum unmittelbar angrenzenden Umfeld der Reliefstruktur maximalen Abstand zur Außenfläche bzw. Oberfläche der Oberseite der zweiten Komponente. Die Hochbereiche weisen gegenüber dem unmittelbar angrenzenden Umfeld der Reliefstruktur einen kürzesten Abstand zu dieser Oberseite bzw. Außenfläche der zweiten Komponente auf. Im vorliegenden Beispiel beträgt dieser kürzeste Abstand im Bereich der Daumenrast 5 an der Stelle O etwa 0,7 mm bis 0,8 mm. Der kürzeste Abstand beträgt an der Stelle P in Fig. 8 etwa 0,5 mm bis 0,6 mm. Die Zackentiefe beträgt bei der vorliegenden Reliefstruktur im Bereich der Daumenrast an der Stelle N etwa 0,9 mm bis 1 mm und am anderen Ende der Reliefstruktur an der Stelle M etwa 2,5 mm bis 3 mm. Daraus ergibt sich für die vorliegende Reliefstruktur ein Abstand von der Oberfläche der Zahnbürste zu den Tiefbereichen von zwischen etwa 1,5 mm bis 3 mm oder 4 mm. Relativ zu der Fließrichtung der zweiten Komponente in Fig. 8 mit den Pfeilen 15 dargestellt, die in diesem Fall auch der Fließrichtung der ersten Komponente entspricht ist die Reliefstruktur derart ausgebildet, dass die zweite Komponente im Bereich der Reliefstruktur im wesentlichen geneigte Zwischenhochbereiche umströmt, die relativ zur Horizontalen 12 etwa einen Winkel von 10° bis 60° oder 0° bis 70° einschließen. Bei einer entgegengesetzten Ausrichtung der Reliefstruktur entgegen der Anströmrichtung der zweiten Komponente wäre mit höheren Qualitätseinbußen bei sonstigen gleich bleibenden Parametern zu rechnen. Die geneigten Flächen der Zwischenhochbereiche 12 sind also in Strömungsrichtung geneigt, wobei zwischen den Hoch- und den Tiefbereichen kaum Störungen für die zweite Komponente entstehen, weil diese auf den geneigten Flächen, gleichsam einer Rampe, angeströmt wird. Vorzugsweise sind eine Vielzahl von Hochbereichen, Zwischenhochbereichen und Tiefbereichen in der Reliefstruktur vorgesehen, wobei eine nicht unterbrochene Kante oder Fläche als je ein Bereich angesehen werden. Die dargestellte Reliefstruktur weist z.B. 13 Hochbereiche (einschließlich dem am hinteren Ende hinter dem Markenlogo), 14 Tiefbereiche (je in Form von Kanten) und 14 Zwischenhochbereiche (je in Form von geneigten Flächenabschnitten) auf. Ein Minimum von je 2 Hoch-, Tief- und Zwischenhochbereichen oder insbesondere 5 ist vorteilhaft. Auch eine Reliefstruktur mit nur einem Zwischenhochbereich, der etwa ausgehend vom Markenlogo von einem Tiefbereich bis zur Daumenrast zu einem Hochbereich geneigt verläuft und ggf mit einem spiegelbildlichen Abschnitt auf der anderen Seite des Markenlogos auf der Oberseite des Griffbereiches zum Endbereich hin ebenfalls geneigt ansteigend verläuft ist denkbar.

Es hat sich gezeigt, dass die strömungsgünstige Ausrichtung und Ausbildung der Reliefstruktur mit Zwischenhochbereichen den Widerstand für die anströmende heiße Komponente in die Werkzeugform vermindert und somit die erste Komponente weniger beim Einströmen anschmelzt und Schlierenbildungen und sonstige qualitative Defekte vermieden werden. Anders optisch erscheinende Reliefstruktur mit jedoch Zwischenhochbereichen sind zur Erreichung dieser Vorteile ebenfalls geeignet.

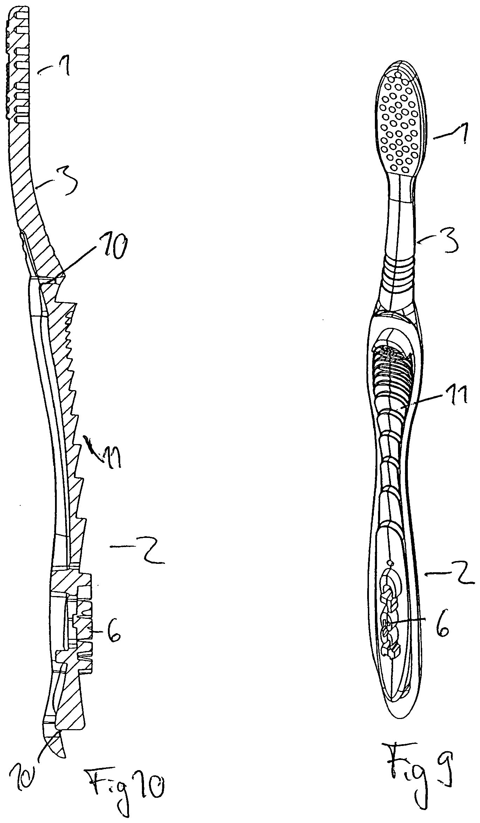

Die Fign. 9 und 10 zeigen den Teil der Zahnbürste, der durch die erste Komponente hergestellt wird. Die erste Komponente ist bevorzugt aus Polypropylen, insbesondere in weißer Farbe und ist somit als Hartkunststoff ausgebildet. Der Kopfbereich 1 ohne Zahnreinigungselemente 4, der Großteil des Halsbereichs 3 und etwa die Hälfte oder etwa 60% oder max. 70% in Gewichtsanteilen des Griffbereichs 2 sind somit ausschließlich durch die erste Komponente herstellbar. Die Fig. 9 zeigt die Reliefstruktur 11 und alle übrigen Teile, die in der ersten Komponente hergestellt werden in perspektivischer Ansicht, wobei die Reliefstruktur perspektivisch als Schuppenmuster ausgebildet ist. Da sich der Anspritzpunkt etwa unterhalb des Markenlogos 6 befindet im Griffbereich auf der Unterseite der Zahnbürste und der Anspritzpunkt für die zweite Komponente etwa im selben Bereich liegt, ist die Ausrichtung der Reliefstruktur relativ zum Anspritzpunkt unter Vermeidung von steilen Wandungen in einem Winkel von 80° bis 110° entgegen der Strömungsrichtung der zweiten Komponente in der Reliefstruktur erkennbar.

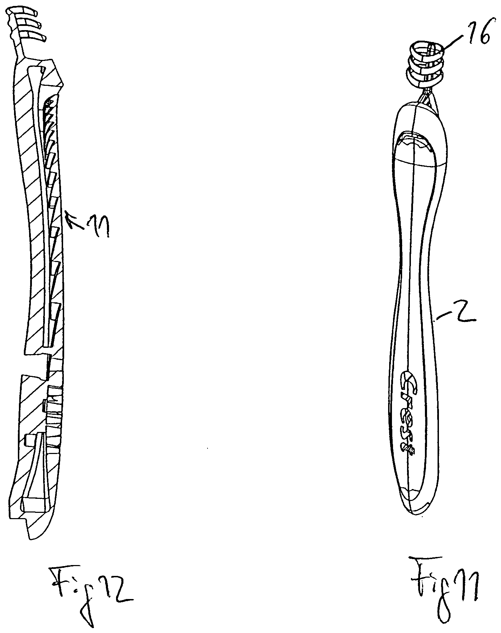

Die Fign. 11 und 12 zeigen zur Veranschaulichung den nur durch die zweite Komponente theoretisch (tatsächlich wird die zweite Komponente über die erste gespritzt) erzeugten Spritzling. Die zweite Komponente bildet somit etwa 40 bis 50 Gewichts% des Griffbereichs aus und weist daneben drei ringförmige Verzierungselemente im Übergangsbereich zwischen Griffbereich und Halsbereich 3 auf. Insbesondere in der Schnittdarstellung nach Fig. 12 ist erneut erkennbar, wie im Bereich der Reliefstruktur 11 durch die Minimierung der zu überwindenden Höhenunterschiede in Flussrichtung der zweiten Komponente eine qualitativ hochwertige Reliefstruktur erzeugbar ist. Die Reliefstruktur 11 ist derart ausgebildet, dass durch die Zwischenhochbereiche die durch die zweite Komponente aufzufüllende Materialstärke möglichst gering bleibt (siehe die Bereichsangaben weiter vorne) und das bevorzugt sprunghafte Änderungen in der Materialstärke der Reliefstruktur von einem Hoch- zu einem Tiefbereich und nicht umgekehrt in Strömungsrichtung der zweiten Komponente erfolgen.

Die zweite Komponente ist vorzugsweise aus einem Hartkunststoff, vorzugsweise aus Polypropylen hergestellt. Diesem Hartkunststoff wird zu etwa 2 % bis 5 % Gewichtsanteilen ein Farbstoff beigemischt, so dass eine transluzente oder ohne Farbstoff eine transparente Wirkung entsteht. Alternativ ist die zweite Komponente aus einem entsprechend transparenten oder etwa wie oben leicht eingefärbten transluzenten Elastomer ausgebildet.

Die erste und die zweite Komponente sind hinsichtlich ihrer Gewichtsanteile etwa gleichmäßig im Griffbereich aufgeteilt, so dass bevorzugt zumindest 30 % bis 40 % der Gesamtgewichtsanteile des Zahnbürstenkunststoffes durch die zweite Komponente gebildet ist. Vorzugsweise sind ausschließlich 2 Komponenten für Griff, Hals und Kopfbereich der Zahnbürste (ohne Reinigungselemente) vorgesehen, so dass optimierte Zykluszeiten zum Spritzgießen möglich sind. Der Moldflow Index (MFI) für die zweite Komponente beträgt vorzugsweise zwischen 15 bis 45 und insbesondere zwischen 15 und 40.

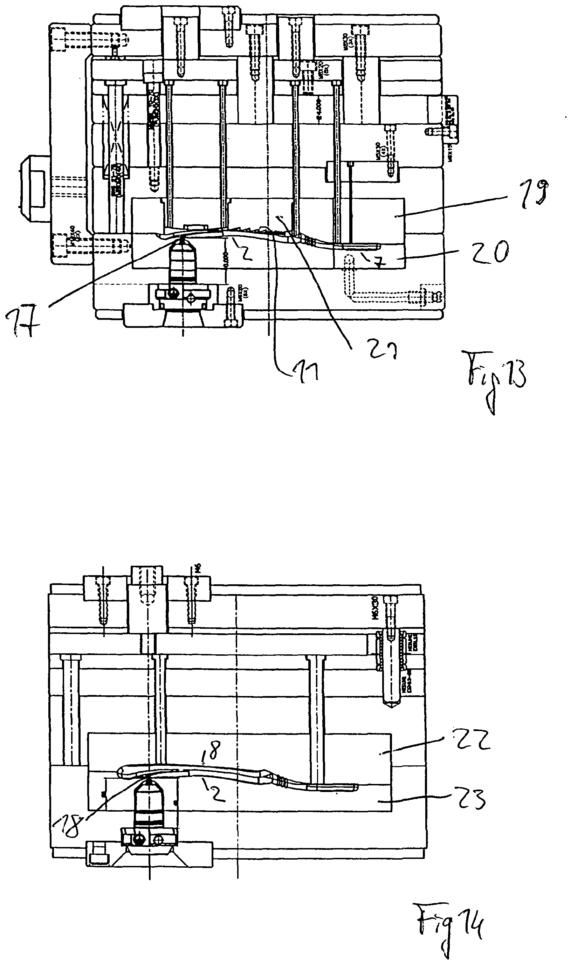

Die Fig. 13 zeigt eine Seitenansicht durch ein Werkzeug zur spritzgusstechnischen Herstellung der ersten Komponente der Zahnbürste im Heißkanalverfahren. Hierbei ist der Anspritzpunkt 17 im hinteren Bereich des Griffbereichs auf der Rückseite der Zahnbürste angeordnet. Das Spritzgusswerkzeug weist eine obere Hälfte 19 und eine untere Hälfte 20 auf, wobei die Auswerferseite der oberen Hälfte 19 entspricht und die Reliefstruktur 11 vorteilhaft auf der Auswerferseite des Werkzeugs angeordnet ist. Die obere Werkzeughälfte 19 weist vorteilhaft ein Einsatzwerkzeugteil 21 auf, dass das Muster der Reliefstruktur definiert. Durch einfaches Austauschen des Einsatzteils 21 oder der oberen Werkzeughälfte 19 kann somit der für die gesamte Zahnbürste stilprägende Teil mit der Reliefstruktur einfach durch veränderte Einsatzwerkzeuge 21 oder obere Werkzeughälften 19 verändert werden.

Die Fig. 14 zeigt die Vervollständigung der Zahnbürste mit zwei weiteren, oberen 22 und unteren 23 Werkzeughälften zur Vervollständigung der Zahnbürste mit der zweiten Komponente über den Anspritzpunkt 18 im hinteren unteren Griffbereich ebenfalls vorzugsweise im Heisskanalverfahren. Nach Spritzen der ersten Komponente im Werkzeug nach Fig. 13 wird der Spritzling mit der ersten Komponente in das Werkzeug nach Fig. 14 eingesetzt und mit der zweiten Komponente überspritzt. Soweit der Kopfbereich nicht schon im Spritzvorgang mit Reinigungselementen versehen wurde erfolgt dies anschließend mit den bekannten Verfahren.

## Patentansprüche

1. Zahnbürste mit einem Kopfbereich (1) mit Reinigungselementen (4), einem Griffbereich (2) und einem Halsbereich (3), der den Kopf- und Griffbereich miteinander verbindet, wobei die Zahnbürste mit einer ersten Komponente (X) aus Kunststoff und zumindest einer weiteren zweiten Komponente (Y) aus Kunststoff ausgebildet ist, wobei die erste Komponente (X) eine Reliefstruktur (11) aufweist, die von der zweiten Komponente (Y) überdeckt ist, wobei die Reliefstruktur (11) Hochbereiche (14) mit kürzestem Abstand (P, O) zur Außenfläche (8) der zweiten Komponente (Y) und Tiefbereiche (13) mit größtem Abstand zur Außenfläche (8) der zweiten Komponente (Y) aufweist und wobei die Reliefstruktur (11) benachbart zu den Hoch- und Tiefbereichen Zwischenhochbereiche (12) aufweist, deren Abstand zur Außenfläche (8) der zweiten Komponente (Y) zwischen dem der Hoch- und Tiefbereiche liegt, **dadurch gekennzeichnet, dass** die Zwischenhochbereiche relativ zu einer ebenen Horizontfläche entlang der Längsachse der Zahnbürste aus Schrägflächen besteht, wobei die Schrägflächen eine maximale Höhe von unter 3mm und eine Neigung unter 75° aufweisen.

2. Zahnbürste nach Anspruch 1, **dadurch gekennzeichnet, dass** der kürzeste Abstand (P, O) zwischen den Hochbereichen (14) und der Außenfläche (8) der zweiten Komponente (Y) zwischen 0,4 mm und 1 mm beträgt.

3. Zahnbürste nach Anspruch 1, **dadurch gekennzeichnet, dass** der größte Abstand von der Außenfläche der zweiten Komponente (Y) zu den Tiefbereichen (13) zwischen 3 mm und 6 mm beträgt.

4. Zahnbürste nach einem der vorangegangenen Ansprüche, **dadurch gekennzeichnet, dass** die Reliefstruktur (11) ausschließlich an der Oberseite (8) des Griffbereichs (2) angeordnet ist, die mit der Seite übereinstimmt, an der die Zahnreinigungselemente (4) des Kopfbereichs (1) vorgesehen sind.

5. Zahnbürste nach einem der vorangegangenen Ansprüche, **dadurch gekennzeichnet, dass** die Kanten der Reliefstruktur (11) mit einem Radius von > 0,2 mm verrundet sind.

6. Zahnbürste nach einem der vorangegangenen Ansprüche, **dadurch gekennzeichnet, dass** die erste Komponente (X) aus Hartkunststoff gebildet ist.

7. Zahnbürste nach Anspruch 6, **dadurch gekennzeichnet, dass** die erste Komponente (X) aus Polypropylen ausgebildet ist.

8. Zahnbürste nach einem der vorangegangenen Ansprüche, **dadurch gekennzeichnet, dass** die zweite Komponente (Y) aus Hartkunststoff ausgebildet ist.

9. Zahnbürste nach Anspruch 8, **dadurch gekennzeichnet, dass** die zweite Komponente (Y) aus Polypropylen ausgebildet ist.

10. Zahnbürste nach einem der Ansprüche 7 bis 9, **dadurch gekennzeichnet, dass** der ersten oder zweiten Komponente (X, Y) zu max. 20 %, insbesondere zu max. 15 %, neben Polypropylen oder einem anderen Hartkunststoff ein Elastomer zugemischt ist.

11. Zahnbürste nach einem der vorangegangenen Ansprüche, **dadurch gekennzeichnet, dass** der zweiten Komponente (Y) einfärbende Bestandteile zu 0,5 % bis 6 %, insbesondere zu 1 % bis 5 % beigemischt ist.

12. Zahnbürste nach Anspruch 11, **dadurch gekennzeichnet, dass** der zweiten Komponente (Y) ein Färbungsmittel zu 1,5 % bis 4 % beigemischt ist.

13. Zahnbürste nach einem der vorangegangenen Ansprüche, **dadurch gekennzeichnet, dass** die Zwischenhochbereiche (12) eine Fläche von > 1 mm² aufweisen.

14. Zahnbürste nach einem der vorangegangenen Ansprüche, **dadurch gekennzeichnet, dass** der Neigungswinkel der Schrägflächen der Zwischenhochbereiche (12) relativ zu einer ebenen Horizontalfläche entlang der Längsachse (30) der Zahnbürste unter 60° beträgt, vorzugsweise unter 50° beträgt.

15. Zahnbürste nach einem der vorangegangenen Ansprüche, **dadurch gekennzeichnet, dass** der Griffbereich (2) zu 20 % bis 80 %, insbesondere zu 30 % bis 70 % aus der ersten Komponente (X) und zu 20 % bis 80 %, insbesondere zu 30 % bis 70 %, aus der zweiten Komponente (Y) ausgebildet ist.

16. Zahnbürste nach einem der vorangegangenen Ansprüche, **dadurch gekennzeichnet, dass** die erste mit der zweiten Komponente (X, Y) durch mechanische Mittel (9, 10, X, Y) verbunden ist.

17. Zahnbürste nach einem der vorangegangen Ansprüche, **dadurch gekennzeichnet, dass** die Hochbereiche (14) transversale oder gekrümmt transversale Abschnitte zur Längsachse (30) aufweisen.

## Claims

1. Toothbrush with a head section (1) with cleaning elements (4), a handle section (2) and a neck section (3), which connects the head and handle sections to each other, wherein the toothbrush is formed with a first component (X) made of plastic and at least a further, second component (Y) made of plastic, wherein the first component (X) has a relief structure (11) that is covered by the second component (Y), wherein the relief structure (11) has high areas (14) with the shortest distance (P, O) to the outer surface (8) of the second component (Y) and low areas (13) with the greatest distance to the outer surface (8) of the second component (Y) and wherein the relief structure (11) has intermediate high areas (12) adjacent to the high and low areas whose distance to the outer surface (8) of the second component (Y) lies between that of the high and low areas, **characterized in that** the intermediate high areas relative to a flat horizontal surface along the longitudinal axis of the toothbrush consist of inclined surfaces, wherein the inclined surfaces have a maximum height of less than 3 mm and an inclination of less than 75°.

2. Toothbrush according to claim 1, **characterized in that** the shortest distance (P, O) between the high areas (14) and the outer surface (8) of the second component (Y) is between 0.4 mm and 1 mm.

3. Toothbrush according to claim 1, **characterized in that** the greatest distance from the outer surface of the second component (Y) to the low areas (13) measures between 3 mm and 6 mm.

4. Toothbrush according to one of the preceding claims, **characterized in that** the relief structure (11) is exclusively arranged on the upper side (8) of the handle section (2), which is the same side as that on which the tooth cleaning elements (4) of the head section (1) are provided.

5. Toothbrush according to one of the preceding claims, **characterized in that** the edges of the relief structure (11) are rounded with a radius of > 0.2 mm.

6. Toothbrush according to one of the preceding claims, **characterized in that** the first component (X) is formed from hard plastic.

7. Toothbrush according to claim 6, **characterized in that** the first component (X) is formed from polypropylene.

8. Toothbrush according to one of the preceding claims, **characterized in that** the second component (Y) is formed from hard plastic.

9. Toothbrush according to claim 8, **characterized in that** the second component (Y) is formed from polypropylene.

10. Toothbrush according to one of claims 7 to 9, **characterized in that** no more than 20 %, in particular no more than 15 %, of an elastomer is mixed with the first or second component (X, Y) in addition to polypropylene or another hard plastic.

11. Toothbrush after one of the preceding claims, **characterized in that** 0.5 % to 6 %, in particular 1 % to 5 %, of dyeing ingredients are mixed with the second component (Y).

12. Toothbrush according to claim 11, **characterized in that** 1.5 % to 4 % of a coloring agent are mixed with the second component (Y).

13. Toothbrush according to one of the preceding claims, **characterized in that** the intermediate high areas (12) have an area of > 1 mm².

14. Toothbrush according to one of the preceding claims, **characterized in that** the angle of inclination of the inclined surfaces of the intermediate high areas (12) relative to a flat horizontal surface along the longitudinal axis (30) of the toothbrush is less than 60°, preferably less than 50°.

15. Toothbrush according to one of the preceding claims, **characterized in that** 20 % to 80 %, in particular 30 % to 70 %, of the handle section (2) is made of the first component (X) and 20 % to 80 %, in particular 30 % to 70 %, is made of the second component (Y).

16. Toothbrush according to one of the preceding claims, **characterized in that** the first component is connected to the second component (X, Y) by mechanical means (9, 10, X, Y).

17. Toothbrush according to one of the preceding claims, **characterized in that** the high areas (14) have transverse or transversally curved sections with respect to the longitudinal axis (30).

## Revendications

1. Brosse à dents comprenant une zone de tête (1) dotée d'éléments de nettoyage (4), une zone de poignée (2) et une zone de col (3), qui relie entre elles la zone de tête et la zone de poignée, la brosse à dents étant formée d'un premier élément (X) en plastique et d'au moins un second élément (Y) en plastique, le premier élément (X) présentant une structure en relief (11) qui est recouverte par le second élément (Y), la structure en relief (11) présentant des zones rehaussées (14) présentant la distance la plus courte (P, O) par rapport à la surface extérieure (8) du second composant (Y) et des zones renfoncées (13) présentant la distance la plus longue par rapport à la surface extérieure (8) du second composant (Y) et la structure en relief (11) présentant, à proximité des zones rehaussées et renfoncées, des zones rehaussées intermédiaires (12), dont la distance par rapport à la surface extérieure (8) du second composant (Y) est comprise entre celle des zones rehaussées et renfoncées, **caractérisée en ce que** les zones rehaussées intermédiaires par rapport à une surface horizontale plane le long de l'axe longitudinal de la brosse à dents sont constituées de surfaces inclinées, les surfaces inclinées présentant une hauteur maximale inférieure à 3 mm et une inclinaison inférieure à 75°.

2. Brosse à dents selon la revendication 1, **caractérisée en ce que** la distance la plus courte (P, O) entre les zones rehaussées (14) et la surface extérieure (8) du second composant (Y) est comprise entre 0,4 mm et 1 mm.

3. Brosse à dents selon la revendication 1, **caractérisée en ce que** la distance la plus longue entre la surface extérieure du second composant (Y) et les zones renfoncées (13) est comprise entre 3 mm et 6 mm.

4. Brosse à dents selon une des revendications précédentes, **caractérisée en ce que** la structure en relief (11) est disposée exclusivement sur la face supérieure (8) de la zone de poignée (2), qui coïncide avec la face sur laquelle sont disposés les éléments de nettoyage (4) des dents de la zone de tête (1).

5. Brosse à dents selon une des revendications précédentes, **caractérisée en ce que** les bords de la structure en relief (11) sont arrondis selon un rayon > 0,2 mm.

6. Brosse à dents selon une des revendications précédentes, **caractérisée en ce que** le premier composant (X) est réalisé en plastique dur.

7. Brosse à dents selon la revendication 6, **caractérisée en ce que** le premier composant (X) est réalisé en polypropylène.

8. Brosse à dents selon une des revendications précédentes, **caractérisée en ce que** le second composant (Y) est réalisé en plastique dur.

9. Brosse à dents selon la revendication 8, **caractérisée en ce que** le second composant (Y) est réalisé en polypropylène.

10. Brosse à dents selon une des revendications 7 à 9, **caractérisée en ce que** 20 % maximum, en particulier 15 % maximum d'élastomère ont été mélangés au premier ou au second composant (X, Y), en plus du polypropylène ou d'un autre plastique dur.

11. Brosse à dents selon une des revendications précédentes, **caractérisée en ce que** 0,5 % à 6 %, en particulier 1 % à 5 % d'un constituant colorant ont été mélangés au second composant (Y).

12. Brosse à dents selon la revendication 11, **caractérisée en ce que** 1,5 % à 4 % d'un agent colorant ont été mélangés au second composant (Y).

13. Brosse à dents selon une des revendications précédentes, **caractérisée en ce que** les zones rehaussées intermédiaires (12) présentent une surface > 1 mm².

14. Brosse à dents selon une des revendications précédentes, **caractérisée en ce que** l'angle d'inclinaison des surfaces inclinées des zones rehaussées intermédiaires (12) par rapport à une surface horizontale plane le long de l'axe longitudinal (30) de la brosse à dents est inférieur à 60°, de préférence inférieur à 50°.

15. Brosse à dents selon une des revendications précédentes, **caractérisée en ce que** 20 % à 80 %, en particulier 30 % à 70 % du premier composant (X) et 20 % à 80 %, en particulier 30 % à 70 % du second composant (Y) constituent la zone de poignée (2).

16. Brosse à dents selon une des revendications précédentes, **caractérisée en ce que** le premier composant est relié au second composant (X, Y) par un moyen mécanique (9, 10, X, Y).

17. Brosse à dents selon une des revendications précédentes, **caractérisée en ce que** les zones rehaussées (14) présentent des parties transversales ou transversales incurvées par rapport à l'axe longitudinal (30).
